# EUROPÄISCHE PATENTSCHRIFT

(11) **EP 1 090 818 B1**
(45) Veröffentlichungstag und Bekanntmachung des Hinweises auf die Patenterteilung: **09.06.2004**
(21) Anmeldenummer: 00119464.6
(22) Anmeldetag: 15.09.2000
(51) Int. Cl.: B60R 21/34, B62D 21/15, B62D 25/16

(54) **Fussgängerfreundlich ausgelegtes Kraftfahrzeug-Frontend**
Motor vehicle with pedestrian friendly front end
Véhicule à moteur équipé avec un extrémité frontale aimable de piétons

(30) Priorität: 09.10.1999 DE 19948732
(43) Veröffentlichungstag der Anmeldung: 11.04.2001
(73) Patentinhaber: Volkswagen Aktiengesellschaft, 38436 Wolfsburg (DE)
(72) Erfinder: Nordheimer, Karl Heinz, 38440 Wolfsburg (DE); Suttner, Klaus, 38100 Braunschweig (DE)

(56) Entgegenhaltungen:
- DE-A- 2 934 060
- DE-A- 19 723 034
- DE-C- 4 401 023
- US-A- 3 909 058

## Beschreibung

Die Erfindung betrifft ein Kraftfahrzeug-Frontend gemäß dem Oberbegriff des Patentanspruchs 1. Derartige fußgängerfreundlich ausgelegte Kraftfahrzeug-Frontends sind aus der Patentliteratur in unterschiedlichen Ausführungen bekannt; siehe die DE 29 34 060 A1, DE 30 47 969 A1 und DE 44 01 023 C1. Gemeinsam ist diesen Konstruktionen der Ersatz der sonst steifen Verbindungen zwischen den Kotflügeln einerseits und darunter verlaufenden Versteifungsteilen des Aufbaues, also beispielsweise Radhäusern oder Längsträgern, durch in vertikaler Richtung beim Aufprall eines Fußgängers verformbare Deformationsglieder, beispielsweise entsprechend profilierte Bleche. Beim Aufprall eines Fußgängers auf das Frontend werden nämlich zunächst die Beine, des Fußgängers vom üblichen Stoßfänger bzw. der Stoßfängerverkleidung des Frontends erfaßt, und der Fußgänger schlägt mit seinem Oberkörper und dem Kopf von oben her auf die Fronthaube bzw. die seitlich davon verlaufenden Längsbereiche der Kotflügel auf. Durch die beschriebenen Deformationsglieder wird nun sichergestellt, daß die Aufprallenergie insbesondere des Kopfes des Fußgängers in Verformungsarbeit umgesetzt und damit das Verletzungsrisiko des Fußgängers verringert wird.

Bei den angeführten bekannten Frontendkonstruktionen mit Einsatz von Deformationsgliedern zwischen den Kotflügeln einerseits und den Versteifungsteilen des Fahrzeugs andererseits sind die Kotflügel selbst nicht in die fußgängerfreundliche Gestaltung oder Auslegung einbezogen, sondern diese ist auf die beschriebenen Deformationsglieder und damit auf die Abstützung der Kotflügel an den Versteifungsteilen des Fahrzeugs beschränkt. Besonders deutlich zeigt dies die Konstruktion nach der DE 44 01 023 C1, wo die Verbindung zwischen Radhaus und Kotflügel so ausgeführt ist, daß beim Fußgängeraufprall der Kotflügel gleichsam auf einem Auflagesattel des Radhauses abrollt. Das bedeutet aber, daß der Kotflügel in sich gegenüber mit einem Fußgängeraufprall verbundenen vertikalen Belastungen eigensteif ist, d.h. diese an sich örtlich wirkenden Belastungen praktisch über die gesamte Länge des jeweiligen Deformationsgliedes auf dieses verteilt werden.

Der Erfindung liegt die Aufgabe zugrunde, ein gattungsgemäßes Kraftfahrzeug-Frontend mit vernachlässigbarem technischen und kostenmäßigen Aufwand hinsichtlich des Fußgängerschutzes zu verbessern.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

An die Kotflügel eines Kraftfahrzeug-Frontends werden hinsichtlich ihrer. Steife an sich zwei entgegengesetzte Anforderungen gestellt: Zum einen müssen die Kotflügel möglichst eigensteif sein, damit sie nicht nur die Betriebsbeanspruchungen ohne Verformung und ohne Schwingungen aushalten können, sondern auch kleine zusätzliche Kräfte, ohne daß es zu störenden Verformungen kommt. Zum anderen erfordert der definierte Fußgängerschutz eine möglichst große Nachgiebigkeit der Kotflügel. Diesen beiden einander entgegengesetzten Anforderungen trägt die Erfindung dadurch Rechnung, daß sie eine vertikale Nachgiebigkeit der Kotflügel, wie sie für den Fußgängerschutz optimal ist, nur in der Fronthaube benachbarten Längsbereichen der Kotflügel vorsieht, die übrigen Bereiche der Kotflügel aber relativ steif ausführt. Damit sind diejenigen Längsbereiche der Kotflügel, die von einem Fußgängeraufprall erfahrungsgemäß primär betroffen sind, also die nach oben weisenden Längsbereiche, für den Fußgängerschutz optimiert, während die übrigen, mehr oder weniger zur Seite weisenden Bereiche der Kotflügel diesen die im normalen Betrieb erforderliche Steife verleihen.

Die erfindungsgemäße Auslegung der der Fronthaube benachbarten Längsbereiche der Kotflügel hat ferner die erwünschte Folge, daß beim Fußgängeraufprall eine Umsetzung von Aufprallenergie in Verformungsarbeit auch örtlich begrenzt in dem der Fronthaube jeweils benachbarten Längsbereich des Kotflügels erfolgt. Während also beim Stand der Technik die definierte Energieumsetzung praktisch nur in dem jeweiligen Deformationsglied vor sich geht, wird bei der Erfindung der jeweils betroffene Kotflügel infolge der geringen vertikalen Eigensteife seines der Fahrzeugmitte zugekehrten Längsbereichs aktiv zur Energieumsetzung herangezogen.

Wie die nun folgende Beschreibung von Ausführungsbeispielen anhand der Figuren, die im wesentlichen Querschnitte durch Kraftfahrzeug-Frontends wiedergeben, zeigt, läßt die Erfindung in vorteilhafter Weise völlige Freiheit hinsichtlich der Konstruktion der Frontends im einzelnen.

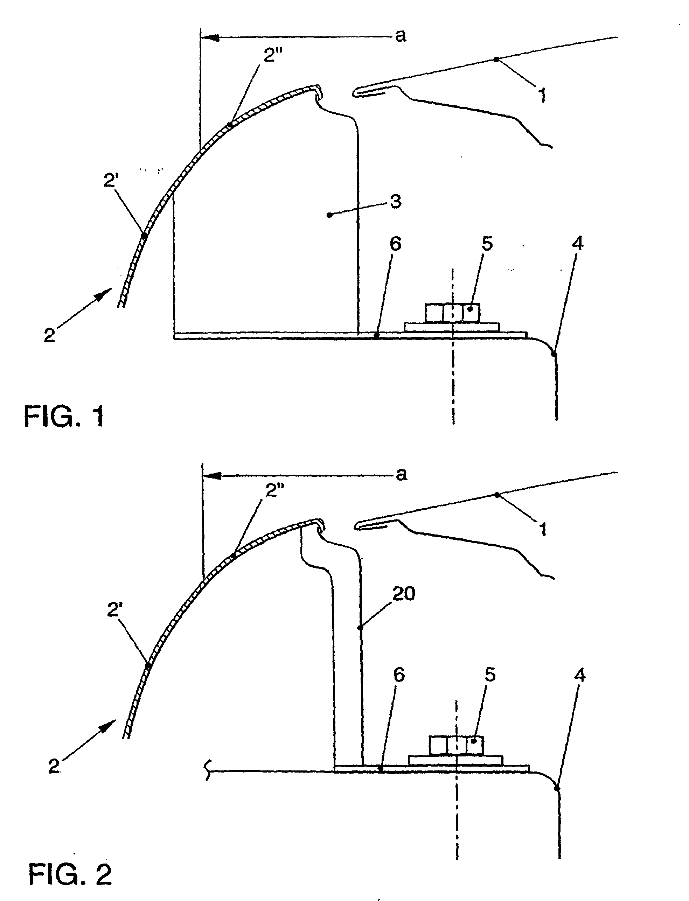

Betrachtet man zunächst das Ausführungsbeispiel nach Figur 1, so erkennt man seitlich der Fronthaube 1 den allgemein mit 2 bezeichneten Kotflügel, der mittels des Deformationsglieds 3, das in diesem Ausführungsbeispiel im wesentlichen aus energieabsorbierendem Schaum besteht, an dem Längsträger 4 des Fahrzeugaufbaues abgestützt ist. Die Festlegung erfolgt mittels Verschraubungen 5, die Löcher in dem an das Deformationsglied 3 angeschraubten Befestigungsprofil 6 durchsetzen.

Außerhalb eines Breitenbereichs a, der erfahrungsgemäß von einem Fußgängeraufprall betroffen ist, auf den also in der Mehrzahl dieser Unfälle der Fußgänger mit seinem Kopf oder Oberkörper aufprallt, ist der Kotflügel 2 in vertikaler Richtung mit großer Eigensteife ausgeführt. Man kann hier also einen eigensteifen Bereich 2' des Kotflügels definieren. Demgegenüber ist erfindungsgemäß der innerhalb des definierten Breitenbereichs a verlaufende Längsbereich 2" des Kotflügels 2 mit geringerer Eigensteife in vertikaler Richtung, nämlich mit geringerer Wandstärke ausgelegt, so daß er beim Aufprall beispielsweise des Kopfes eines Fußgängers sich auch örtlich verformt. Insbesondere bei Herstellung des Kotflügels 2 aus Blechmaterial kann er bereichsweise aus Blechen unterschiedlicher Wandstärke hergestellt sein. Diese Herstellungsweise von Blechteilen mit bereichsweise unterschiedlicher Wandstärke ist auch unter der Bezeichnung Tailored-Blank-Technik bekannt.

Das Ausführungsbeispiel der Figur 2 unterscheidet sich von dem beschriebenen lediglich durch eine andere Gestaltung des dort mit 20 bezeichneten Deformationsglieds. Es erstreckt sich nur über einen Teil des Kotflügel-Längsbereichs 2" (mit verringerter vertikaler Eigensteife) und ist hier gleichsam als Scherelement ausgebildet, das beispielsweise schräg verlaufende offene Rinnen oder Rauten aufweist, die bei vertikaler Belastung durch einen aufprallenden Fußgänger zusammenbrechen.

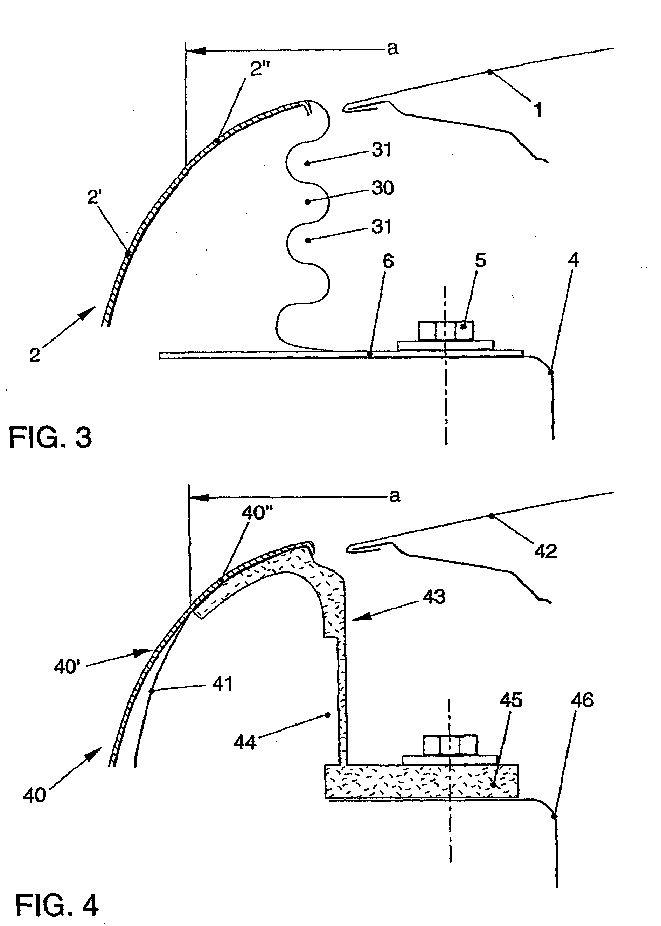

Auch die Ausführungsform nach Figur 3 unterscheidet sich von derjenigen nach Figur 1 nur durch andere Gestaltung des hier mit 30 bezeichneten Deformationsglieds. Es ist hier materialeinheitlich mit dem Kotflügel 2 gewonnen und weist längsverlaufende Sicken oder Vertiefungen 31 auf, so daß bei vertikaler Belastung eine Energieaufnahme durch Faltung erfolgt.

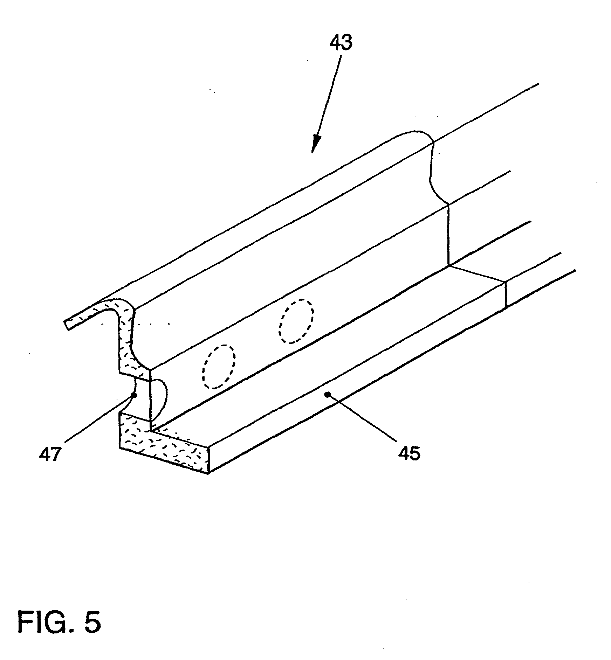

In dem Ausführungsbeispiel nach den Figuren 4 und 5 schließlich ist angenommen, daß der Kotflügel 40 in seinem außerhalb des definierten Breitenbereichs a liegenden Teil 40' mit im wesentlichen in Querebenen verlaufenden Rippen 41 versehen und dadurch versteift ist, die sich aber nicht bis in den der Fronthaube 42 benachbarten Kotflügel-Längsbereich 40" erstrecken. Dieser Bereich ist also wiederum mit geringerer vertikaler Eigensteife ausgeführt und bildet demgemäß einen wirksamen Fußgängerschutz. Eine derartige Konstruktion wird sich besonders bei aus Kunststoff gefertigten Kotflügeln empfehlen.

Nur der Bereich 40" verringerte Eigensteife stützt sich unmittelbar an dem Deformationsglied 43 ab, das hier mit Sollbruchstellen versehen ist und Aussparungen 44 zur Einstellung einer gewünschten Steife aufweist. Dieses Deformationsglied 43 stützt sich mit der Fußpartie 45 seitlich von seiner Angriffsstelle an dem Kotflügel 40 auf dem Längsträger 46 ab, so daß das Deformationsglied 43 nicht nur auf Druck, sondern auch auf Schub und Biegung beansprucht ist. Dies führt zu einem Zusammenbrechen des Deformationsglieds 43 beim Aufprall eines Fußgängers.

Die Befestigung des Deformationsglieds am Kotflügel wird in der Regel durch Klebung erfolgen.

Figur 5 zeigt das Deformationsglied 43 perspektivisch. Wie bei 47 angedeutet, kann eine Einstellung der Steife auch durch Vorsehen von Löchern vorgenommen werden.

Mit der Erfindung wird also eine Erhöhung der Fußgängerfreundlichkeit eines Kraftfahrzeug-Frontends durch Einbeziehung der Kotflügel in das Deformationsverhalten des Frontends gewonnen.

## Patentansprüche

1. Kraftfahrzeug-Frontend mit seitlich einer Fronthaube verlaufenden, Bestandteile der Außenhaut des Fahrzeugs bildenden Kotflügeln und mit in Fahrzeuglängsrichtung verlaufenden Versteifungen, zwischen denen und den Kotflügeln durch Aufprall eines Fußgängers energieabsorbierend vertikal verformbare Deformationsglieder vorgesehen sind, wobei die Kotflügel in der Fronthaube benachbarten Längsbereichen mit geringerer vertikaler Eigensteife ausgelegt sind als in ihren übrigen Bereichen und die Deformationsglieder zumindest in den Längsbereichen geringerer vertikaler Eigensteife an den Kotflügeln angreifen, **dadurch gekennzeichnet, daß** die Längsbereiche (2") geringerer vertikaler Eigensteife eine geringere Wandstärke aufweisen als die übrigen Bereiche (2') der Kotflügel (2).

2. Frontend nach Anspruch 1, **dadurch gekennzeichnet, daß** die Kotflügel (2) aus die Bereiche (2', 2") bildenden Materialbahnen, insbesondere Blechbahnen, unterschiedlicher Wandstärken zusammengesetzt sind.

3. Frontend nach einem der Anprüche 1 und 2, **dadurch gekennzeichnet, daß** nur die übrigen Bereiche (40') Versteifungsrippen (41) aufweisen.

## Claims

1. Motor-vehicle front end having wings which run at the sides of a bonnet and form parts of the skin of the vehicle, and having stiffening sections which run in the longitudinal direction of the vehicle and between which and the wings deformation elements are provided which can be deformed vertically in an energy-absorbing manner by the impact of a pedestrian, the wings in longitudinal regions adjacent to the bonnet being designed with a smaller vertical inherent stiffness than in their other regions, and the deformation elements acting on the wings at least in the longitudinal regions of smaller vertical inherent stiffness, **characterized in that** the longitudinal regions (2") of smaller vertical inherent stiffness have a smaller wall thickness than the remaining regions (2') of the wings (2).

2. Front end according to Claim 1, **characterized in that** the wings (2) are composed of material sheets, in particular sheet-metal sheets, of different wall thicknesses which form the regions (2', 2").

3. Front end according to either of Claims 1 and 2, **characterized in that** only the remaining regions (40') have stiffening ribs (41).

## Revendications

1. Extrémité frontale d'un véhicule automobile, avec des ailes s'étendant latéralement à un capot frontal et formant des composantes de la surface externe du véhicule et avec des raidisseurs s'étendant en direction longitudinale du véhicule, des organes de déformation à forme verticalement modifiable et absorbant l'énergie lors de l'impact d'un piéton s'étendant entre ces derniers et les ailes et dans des zones longitudinales avoisinant le capot frontal, les ailes étant conçues avec une propre rigidité verticale restreinte par rapport à leurs autres zones et les organes de déformation s'attaquant aux ailes au moins dans les zones longitudinales présentant une propre rigidité verticale restreinte, **caractérisée en ce que** les zones longitudinales (2") présentant une propre rigidité verticale restreinte présentent des parois d'une épaisseur plus faible que celle des autres zones (2') des ailes (2).

2. Extrémité frontale selon la revendication 1, **caractérisée en ce que** les ailes (2) sont constituées par des bandes de matériau formant les zones (2', 2"), notamment des bandes de tôle avec des parois de différentes épaisseurs.

3. Extrémité frontale selon l'une quelconque des revendications 1 et 2, **caractérisée en ce que** seules les zones restantes (40') sont munies de rainures de raidissement (41).
